# EUROPÄISCHE PATENTSCHRIFT

(11) **EP 1 208 256 B1**
(45) Veröffentlichungstag und Bekanntmachung des Hinweises auf die Patenterteilung: **13.10.2004**
(21) Anmeldenummer: 00967626.3
(22) Anmeldetag: 23.08.2000
(51) Int. Cl.: D03D 47/36, D03D 49/70

(54) **WEBMASCHINE MIT EINER VORRICHTUNG ZUM ABTRENNEN EINES SCHUSSFADENS**
POWER LOOM WITH A DEVICE FOR CUTTING OFF A WEFT THREAD
MACHINE A TISSER COMPORTANT UN DISPOSITIF POUR SEPARER UN FIL DE TRAME

(30) Priorität: 02.09.1999 DE 19941784
(43) Veröffentlichungstag der Anmeldung: 29.05.2002
(73) Patentinhaber: Picanol N.V., 8900 Ieper (BE)
(72) Erfinder: PEETERS, Jozef, B-8900 Ieper (BE); PUISSANT, Patrick, B-9270 Laarne (BE)
(74) Vertreter: Patentanwälte Ruff, Wilhelm, Beier, Dauster & Partner
(86) Internationale Anmeldenummer: PCT/EP2000/008214
(87) Internationale Veröffentlichungsnummer: WO 2001/018294

(56) Entgegenhaltungen:
- NL-C- 175 326
- DATABASE WPI Section Ch, Week 199343 Derwent Publications Ltd., London, GB; Class A11, AN 1993-340223 XP002156380 & JP 05 247782 A (ASAHI KASEI), 24. September 1993 (1993-09-24)
- DATABASE WPI Section Ch, Week 199343 Derwent Publications Ltd., London, GB; Class A11, AN 1993-340253 XP002156381 & JP 05 247835 A (ASAHI KASEI), 24. September 1993 (1993-09-24) in der Anmeldung erwähnt

## Beschreibung

Die Erfindung betrifft eine Webmaschine mit einer Vorrichtung zum Abtrennen eines für einen Schusseintrag bereitgehaltenen Schussfadens von einem bereits an ein Gewebe angeschlagenen Schussfaden und ein Verfahren zum Abtrennen eines Schussfadens.

Beim Weben wird ein in ein Webfach eingetragener Schussfaden mittels eines Webblattes an dem Geweberand angeschlagen, dem sogenannten Warenrand. Bevor der gleiche Schussfaden wieder in ein Webfach eingetragen wird, wird er auf der Eintragsseite abgeschnitten. Es ist vorteilhaft, wenn das Abschneiden des einzutragenden Schussfadens zu einem exakt definierten Zeitpunkt durchgeführt werden kann, da dadurch die Länge des als nächstes eingetragenen Schussfadens und/oder die Fadenspannung und sonstige Verhältnisse beeinflusst werden können.

Bei einer bekannten Webmaschine der eingangs genannten Art (EP 0 284 766 A1) erfolgt das Abtrennen des Schussfadens mittels einer mechanischen Schneideinrichtung, die einen von dem Hauptmaschinenantrieb unabhängigen Antrieb aufweist, der mittels einer programmierbaren Steuerung gesteuert ist.

Der Erfindung liegt die Aufgabe zugrunde, eine Vorrichtung der eingangs genannten Art so auszubilden, dass der Zeitpunkt des Abtrennens noch exakter definiert werden kann.

Diese Aufgabe wird dadurch gelöst, dass die Vorrichtung zum Abtrennen als Laser ausgeführt ist, dessen Laserstrahl zu einem Flachstrahl umgeformt ist.

Die erfindungsgemäße Ausbildung hat den Vorteil, dass ein derartiger Laser sehr schnell ansteuerbar ist, so dass das Durchtrennen des Schussfadens in Bruchteilen von Sekunden durchgeführt werden kann. Darüber hinaus arbeitet ein derartiger Laser ohne mechanische, verschleißbehaftete Teile, so dass der vorgegebene Zeitpunkt des Abtrennens unabhängig von jeglichem Verschleiß immer exakt eingehalten werden kann. Ein weiterer Vorteil wird dann erhalten, wenn der Schussfaden aus Kunststoffmaterial besteht, beispielsweise aus einem Filamentfaden, oder Kunststoffanteile enthält. Dieses Kunststoffmaterial wird angeschmolzen, so dass die Filamentfäden oder die Fasern des geschnittenen Endes sich miteinander verbinden. Dies ist ein besonderer Vorteil bei Luftdüsenwebmaschinen. Bei Luftdüsenwebmaschinen besteht die Gefahr, dass der in einer Haupteinblasdüse bereitgehaltene Schussfaden im Bereich seines Endes sich zerfasert oder sich auflöst. Dies führt dann zu Problemen bei dem nachfolgenden Schusseintrag, da die Gefahr des Hängenbleibens an Blattzähnen des Webblattes erhöht wird. Außerdem wird dann das Aussehen der der Eintragsseite gegenüberliegenden Webkante beeinträchtigt. Die Erfindung führt somit bei Luftdüsenwebmaschinen zu besonderen Vorteilen. Bei anderen Webmaschinentypen, beispielsweise bei Greiferwebmaschinen, ist sie allerdings ebenfalls von erheblichem Vorteil, insbesondere wegen der Genauigkeit des Bestimmens des Zeitpunktes des Abtrennens.

Um mit einem nur eine geringe Energiemenge verbrauchenden Laser auszukommen, muss der Strahl auf einen relativ kleinen Punkt fokussiert werden. Dies kann in Verbindung mit Fäden zu Problemen führen, da es in der Praxis Schwierigkeiten bereiten kann, einen abzutrennenden Schussfaden exakt zu dem Fokus des Lasers auszurichten. Dieser Schwierigkeit wird durch die Umformung des Laserstrahls in einen Flachstrahl begegnet. Der Flachstrahl kann mit seiner Längserstreckung quer zur Längsrichtung des Fadens ausgerichtet werden, so dass das Positionieren des Fadens und/oder des Lasers kein Problem bereitet.

Trennvorrichtungen, die als Laser ausgeführt sind, sind in der Textiltechnik grundsätzlich bekannt, beispielsweise durch die IT 1 140 124, die NL 175 326 und die JP 5-247 835 A. Bei diesem Stand der Technik werden die Trennvorrichtungen in der Form von Lasern zum Durchtrennen von Geweben oder zum Aufschneiden von Schlaufen bei der Erzeugung von Samtgeweben benutzt.

In weiterer Ausgestaltung der Erfindung wird vorgesehen, dass der Laser mit einem optischen System ausgerüstet ist, das einen ausgesandten Laserstrahl zu einem Flachstrahl umformt.

Weitere Merkmale und Vorteile der Erfindung ergeben sich aus der nachfolgenden Beschreibung und dem in der Zeichnung dargestellten Ausführungsbeispiel.
- Fig. 1: zeigt einen Ausschnitt einer Luftdüsenwebmaschine mit einer erfindungsgemäßen Vorrichtung zum Trennen und
- Fig. 2: einen Laser mit einem optischen System, das den Laserstrahl zu einem Flachstrahl umformt.

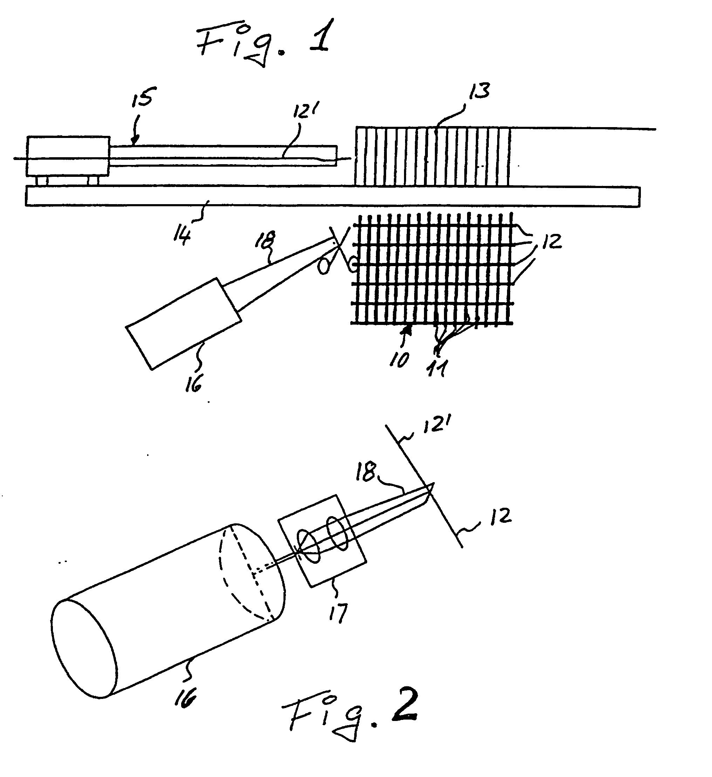

Mit der in Fig. 1 nur sehr schematisch dargestellten Webmaschine wird ein Gewebe 10 aus Kettfäden 11 und Schussfäden 12 gewoben. Die Kettfäden 11 werden in nicht näher dargestellter Weise mittels Fachbildungsmitteln teilweise angehoben und teilweise abgesenkt, so dass ein Webfach gebildet wird, in welches die Schussfäden 12 eingetragen werden. Nach dem Eintrag wird der Schussfaden 12 mittels eines Webblattes 13 an

(Fortsetzung S. 4 der ursprünglichen Unterlagen). den Geweberand oder Warenrand angeschlagen. Das Webblatt 13 ist an einem Webladenprofil 14 einer Weblade angebracht, die eine hin- und herschwenkende Bewegung ausführt. An dem Webladenprofil 14 ist bei dem dargestellten Ausführungsbeispiel eine Hauptblasdüse 15 angebracht, die die hin- und herschwenkende Bewegung mit dem Webblatt 13 zusammen ausführt. Die Hauptblasdüse ist nur sehr schematisch dargestellt. In der Praxis werden bevorzugt zwei hintereinander angeordnete Hauptblasdüsen vorgesehen. In Querrichtung über das Webblatt 13 verteilt sind weiter sogenannten Staffettendüsen angeordnet, die ebenfalls mit Druckluft beaufschlagt werden und die den Schußfaden innerhalb des Webfaches weiter bis zur gegenüberliegenden Seite transportieren.

Der eingetragene und an den Warenrand angeschlagene Schußfaden 12 wird mittels einer Vorrichtung 16 zum Abtrennen von dem innerhalb der Hauptblasdüse 15 verbleibenden Schußfadenteil 12' abgetrennt. Danach schwenken das Webblatt 13 und die Hauptblasdüse 15 mit dem Schußfaden 12' zurück. Sobald ein neues Webfach gebildet worden ist, erfolgt ein erneuter Schußeintrag, wobei diesmal der Schußfaden 12' eingetragen wird. Wie schon gesagt wurde, ist die Webmaschine nur in sehr vereinfachter Form dargestellt. In der Praxis werden mehrere Hauptblasdüsen 15 neben und übereinander verwendet, um mehrere Schußfäden von verschiedenen Garnarten und/oder Garnfarben einzutragen. Außerdem wird die Anzahl der Hauptblasdüsen erhöht, auch wenn nur gleichartige Schußfäden eingetragen werden, um die Arbeitsgeschwindigkeit zu erhöhen.

Das Ende des nunmehr bereitgehaltenen Schußfadens 12' befindet sich in einer Luftströmung. Diese Luftströmung hat die Aufgabe, den bereitgehaltenen Schußfaden 12' so zu halten, daß er nicht aus der Hauptblasdüse 15 zurückspringt. Diese zum Halten des Schußfadens 12' dienende Luftströmung ist zwar schwächer als die während des Schußeintrags eingesetzte Luftströmung, jedoch führt diese Luftströmung dazu, insbesondere wenn eine Webpause besteht, daß das Ende des bereitgehaltenen Schußfadens 12' aufgelöst wird. Das ist besonders störend, wenn Filamentfäden als Schußfaden verwendet werden, die keine oder nur eine sehr schwache Drehung aufweisen. Derartige Filamentfäden entstehen z.B. aus einer Vielzahl dünnen Einzelfilamenten, die parallel nebeneinander liegen und an einzelnen, in Abstand zueinanderliegenden Stellen miteinander verschmolzen sind. Ein derartiger Filamentfaden kann sich im Bereich seines Endes auflösen, so daß die Gefahr besteht, daß er beim Eintragen des Webfachs an den Blattzähnen des Webblattes hängenbleibt. Außerdem ergibt sich dadurch ein optisch wenig ansprechendes Ansehen der Webkante auf der der Eintragseite gegenüberliegenden Seite.

Um dies zu vermeiden, ist die Vorrichtung 16 zum Abtrennen als ein gepulsten Laser ausgeführt. Dieser gepulste Laser, der ein Festkörerlaser oder bevorzugt ein Gaslaser sein kann, zertrennt den Schußfaden in sehr kurzer Zeit, wobei eine hohe Hitze entwickelt wird, die die Kunststoffäden oder Kunststoffanteile zum Schmelzen bringt, so daß die Enden der Fasern oder Filamente miteinander verschmolzen werden. Auch wenn die aus der Hauptblasdüse 15 weiterhin ausgeblasene Blasluft zu einem sehr schnellen Abkühlen führt, bewirkt die starke Hitzeentwicklung des Lasers, daß ein Verschmelzen stattfindet. Das Ende des bereitgehaltenen Schußfadens 12' bleibt somit geschlossen.

Darüber hinaus hat die als Laser ausgeführte Trennvorrichtung den Vorteil, daß sie sehr schnell anspricht und sehr schnell ein Durchtrennen des Schußfadens durchführt. Der Trennvorgang kann daher zeitlich sehr genau auf die Bedürfnisse abgestimmt werden. Dies ist auch bei anderen Webmaschinen von Vorteil, beispielsweise bei Greiferwebmaschinen. Bei Greiferwebmaschinen wird ein eingetragener Schußfaden erst dann von dem bereitgehaltenen Schußfaden abgetrennt, wenn er für einen weiteren Schußeintrag von dem Greifer aufgenommen und mitgenommen wird. Dabei ist es wichtig, daß der Zeitpunkt des Durchtrennens sehr genau auf den Zeitpunkt abgestimmt wird, zu welchem der Schußfaden für einen Schußeintrag in den Greifer eingespannt und von diesem mitgenommen wird.

Um den Energieverbrauch der als Laser ausgebildeten Vorrichtung möglichst gering zu halten, wird der Laserstrahl des Lasers eng fokusiert. Dies kann beispielsweise durch ein optisches System mit sphärischen Linsen geschehen. Eine punktweise Fokusierung führt jedoch zu einem Positionierproblem, da der Schußfaden selbst einen relativ geringen Durchmesser aufweist. Aus diesem Grund wird ein optisches System 17 vorgesehen, das spezielle Linsen enthält, insbesondere zylinderische Linsen. Mit diesem optischen System 17 wird der Laserstrahl zu einem Flachstrahl 18 umgeformt. Der Flachstrahl 18 wird so ausgerichtet, daß seine Längserstreckung quer zu der Längsachse des zu zertrennenden Schußfadens 12, 12' verläuft.

Ein weiterer Vorteil der Vorrichtung 16 in Form eines Lasers ist, daß der Abstand zwischen der Hauptblasdüse 15 und dem Webblatt 13 relativ gering gehalten werden kann, da der Laserstrahl praktisch keinen Platz benötigt. Außerdem wird der Vorteil erhalten, daß die Vorrichtung 16 keine beweglichen und damit verschleißbehaftete Teile aufweist, so daß eine dauerhafte, exakte Funktionsfähigkeit gewährleistet ist.

## Patentansprüche

1. Webmaschine mit einer Vorrichtung (16) zum Abtrennen eines für einen Schusseintrag bereitgehaltenen Schussfadens (12') von einem bereits an ein Gewebe (10) angeschlagenen Schussfaden (12), **dadurch gekennzeichnet, dass** die Vorrichtung (16) zum Abtrennen als Laser ausgeführt ist, dessen Laserstrahl zu einem Flachstrahl (18) umgeformt ist.

2. Webmaschine nach Anspruch 1, **dadurch gekennzeichnet, dass** der Laser mit einem optischen System (17) ausgerüstet ist, das einen ausgesandten Laserstrahl zu einem Flachstrahl (18) umformt.

3. Webmaschine nach Anspruch 1 oder 2, **dadurch gekennzeichnet, dass** ein gepulst betriebener Laser vorgesehen ist.

4. Webmaschine nach einem der Ansprüche 1 bis 3, **dadurch gekennzeichnet, dass** sie eine Luftdüsenwebmaschine ist.

5. Webmaschine nach einen der Ansprüche 1 bis 4, **dadurch gekennzeichnet, dass** die als Laser ausgeführte Vorrichtung (16) zum Abtrennen derart positionniert ist, dass der Laserstrahl in den Bereich zwischen Ausgang der Hauptblasdüse (15) und Webblatt (13) ausgerichtet ist, wenn der Schussfaden (12) abgetrennt wird.

6. Webmaschine nach einem der Ansprüche 1 bis 3, **dadurch gekennzeichnet, dass** sie eine Greiferwebmaschine ist.

7. Verfahren zum Abtrennen eines Schussfadens bei einer Webmaschine, der für einen Schusseintrag bereitgehalten wird, von einem bereits an ein Gewebe angeschlagenen Schussfadens (12), **dadurch gekennzeichnet, dass** der Schussfaden mittels eines Lasers abgetrennt wird, dessen Laserstrahl zu einem Flachstrahl (18) umgeformt wird.

## Claims

1. Weaving machine with a device (16) for the separation of a weft yarn (12') hold ready for insertion from a weft yarn (12) which has already been beaten up to a woven textile (10), **characterized by** the fact that separating device (16) is executed as a laser, the beam of which has been converted into a flat beam (18).

2. Weaving machine in accordance with claim 1, **characterized by** the fact that the laser is fitted with an optical system (17) that converts a transmitted laser beam into a flat beam (18).

3. Weaving machine in accordance with Claim 1 or 2, **characterized by** the fact that a pulse-operated laser is deployed.

4. Weaving machine in accordance with Claim 1 through 3, **characterized by** the fact that it is an air-jet loom.

5. Weaving machine in accordance with one of the claims 1 to 4, **characterized by** the fact that the device (16) for separating that is designed as laser in positioned such that the laser beam is directed in the area between the exit of the main blower nozzle (15) and the reed (13), when the weft yarn (12) is separated.

6. Weaving machine in accordance with Claim 1 through 3, **characterized by** the fact that it is a rapier loom.

7. Method for separating a weft yarn in a mechanical loom, which is hold ready for insertion from a weft yarn (12) which has already been beaten up to a woven textile, **characterized by** the fact that the weft yarn is separated using a laser, the beam of which has been converted into a flat beam (18).

## Revendications

1. Machine à tisser avec un dispositif (16) destiné à séparer un fil de trame (12') tenu à la disposition d'une insertion de trame d'un fil de trame (12) déjà frappé contre un tissu (10), **caractérisée par le fait que** le dispositif (16) destiné a séparer est configuré sous forme de laser dont le faisceau laser est converti en un faisceau plat (18).

2. Machine à tisser selon la revendication 1, **caractérisée par le fait que** le laser est équipé d'un système optique (17) qui convertit un faisceau laser émis en un faisceau plat (18).

3. Machine à tisser selon la revendication 1 ou 2, **caractérisée par le fait qu'**un laser en fonctionnement pulsé est prévu.

4. Machine à tisser selon l'une quelconque des revendications 1 à 3, **caractérisée par le fait qu'**elle est une machine à tisser à jet d'air.

5. Machine à tisser selon l'une quelconque des revendications 1 à 4, **caractérisée par le fait qu** le dispositif (16) destiné à séparer configuré comme laser est positionné tel que le faisceau laser est dirigé dans l'aire entre la sortie de la buse soufflante principale et le peigne (13), lorsque le fil de trame (12) est séparé.

6. Machine à tisser selon l'une quelconque des revendications 1 à 3, **caractérisée par le fait qu'**elle est une machine à tisser à pince.

7. Procédé de séparer d'un fil de trame pour une machine à tisser tenu à la disposition d'une insertion de trame d'un fil de trame (12) déjà frappé contre un tissu, **caractérisée par le fait que** le fil de trame est séparé au moyen d'un laser dont le faisceau laser est converti en un faisceau plat (18).
